(19) Europäisches Patentamt
European Patent Office
Office européen des brevets

(11) **EP 2 204 669 A1**

(12) **EUROPÄISCHE PATENTANMELDUNG**

(43) Veröffentlichungstag:
**07.07.2010 Patentblatt 2010/27**

(51) Int Cl.:
***G01S 13/84*** *(2006.01)*

(21) Anmeldenummer: **09015917.9**

(22) Anmeldetag: **23.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **30.12.2008 DE 102008063255**

(71) Anmelder: **Atmel Automotive GmbH**
**74072 Heilbronn (DE)**

(72) Erfinder:
• **Kluge, Wolfram, Dr-Ing.**
**01109 Dresden (DE)**
• **Sachse, Eric, Dipl-Ing.**
**04155 Leipzig (DE)**

(74) Vertreter: **Koch Müller**
**Patentanwaltsgesellschaft mbH**
**Maasstrasse 32/1**
**69123 Heidelberg (DE)**

(54) **System, Verfahren und Schaltung zur Entfernungsmessung zwischen zwei Knoten eines Funknetzes**

(57) System und Verfahren zur Entfernungsmessung zwischen zwei Knoten (A, B) eines Funknetzes,
- bei dem vom ersten Knoten (A) ein erstes unmoduliertes Trägersignal (RF1) gesendet und vom zweiten Knoten (B) empfangen wird,
- bei dem vom zweiten Knoten (B) ein zweites unmoduliertes Trägersignal (RF2) gesendet und vom ersten Knoten (A) empfangen wird,
- bei dem vom ersten Knoten (A) ein erster Wert und ein zweiter Wert einer ersten Phase (φA1, φA2) gemessen werden, wobei der erste Wert der ersten Phase (φA1, φA2) einer ersten Frequenz (f1) des empfangenen zweiten Trägersignals (RF2) und der zweite Wert der ersten Phase (φA1, φA2) einer zweiten Frequenz (f2) des empfangenen zweiten Trägersignals (RF2) zugeordnet sind,
wobei die erste Frequenz (f1) und die zweite Frequenz (f2) einen Frequenzunterschied (Δf) aufweisen,
- bei dem vom zweiten Knoten (B) ein dritter Wert und ein vierter Wert einer zweiten Phase (φB1, φB2) gemessen werden, wobei der dritte Wert der zweiten Phase (φB1, φB2) einer dritten Frequenz (f1) des empfangenen ersten Trägersignals (RF1) und der vierte Wert der zweiten Phase (φB1, φB2) einer vierten Frequenz (f2) des empfangenen ersten Trägersignals (RF1) zugeordnet sind, wobei die dritte Frequenz (f1) und die vierte Frequenz (f2) den Frequenzunterschied (Δf) aufweisen, und
- bei dem die Entfernung aus dem Frequenzunterschied (Δf), aus den dem ersten Wert und dem zweiten Wert der ersten Phase (φA1, φA2) und aus dem dritten Wert und dem vierten Wert der zweiten Phase (φB1, φB2) bestimmt wird.

FIG.1

**Beschreibung**

Die vorliegende Erfindung betrifft ein System, ein Verfahren und eine Schaltung zur Entfernungsmessung zwischen zwei Knoten eines Funknetzes.

In einem Funknetz ist es wünschenswert die Knoten des Funknetzes zur orten oder zumindest eine Entfernung zwischen den Knoten zu bestimmen. Hierdurch kann beispielsweise ein defekter Knoten leicht gefunden werden. Auch können langsame Bewegungen von Knoten - beispielsweise eines Transportmittels in einer Fabrik - verfolgt werden. Ebenfalls kann eine Ortung der Knoten vorteilhaft bei der Brandbekämpfung eingesetzt werden, wenn die von einem Flugzeug abgeworfenen Knoten geortet werden können und eine lokal erhöhte Temperatur übermitteln.

Aus der US 5,220,332 ist ein Entfernungsmessungssystem mit einer Abfrageeinrichtung und einem Transponder bekannt, das nicht-simultane Messungen zwischen zwei Objektes ermöglicht. Ein Trägersignal wird mit einem (niederfrequenten) Modulationssignal mit einer veränderbaren Modulationsfrequenz moduliert um mittels einer Phasenmessung oder alternativ einer Laufzeitmessung eine Entfernung zwischen der Abfrageeinrichtung und dem Transponder aus der Änderung des Modulationssignals zu bestimmen.

Aus der WO 02/01247 A2 ist ein Verfahren zur Abstandsmessung zwischen zwei Objekten mit Hilfe elektromagnetischer Wellen bekannt. Es werden ein Abfragesignal einer Basisstation und ein Antwortsignal eines tragbaren Codegebers zweimal bei unterschiedlichen Trägerfrequenzen ausgesendet. Die Trägerfrequenzen sind dabei korreliert, d.h., dass sie voneinander abhängig sind. Die Trägerfrequenzen werden aneinander angeglichen, so dass eine Phasenverschiebung zwischen den Signalen gemessen werden kann. Aus dieser Phasenverschiebung wird der Abstand des Codegebers zur Basisstation berechnet. Das Abfragesignal und das Antwortsignal können bei unterschiedlichen Trägerfrequenzen oder bei gleichen Trägerfrequenzen ausgesendet werden. Die Trägerfrequenzen werden für einen erneuten Frage-Antwort-Dialog verändert.

Ist ein Transceiver eines Knotens für ein Sensornetzwerk nach dem Industrie-Standard IEEE 802.15.4 für ein halfduplex-System ausgelegt, so kann dieser nicht gleichzeitig senden und empfangen. Soll dieser Transceiver als aktiver Reflektor zur Phasenmessung dienen, muss der Knoten daher die Phase des empfangenen Signals beispielsweise durch eine Phasenregelschleife speichern und nach dem Umschalten von Empfangen auf Senden dieselbe gespeicherte Phase wieder zum Senden benutzen. Beispielsweise wird beim Empfang durch eine zusätzliche Phasenregelschleife der Quarzoszillator des Transceivers des als aktiver Reflektor arbeitenden Knotens so eingeregelt, dass die Frequenz und Phase des LO-Signals (LO - engl. Local Oscillator) des lokalen Oszillators mit dem Empfangssignal übereinstimmen. Beim Umschalten auf Senden muss die zusätzliche Phasenregelschleife aufgetrennt werden und der nun in der Frequenz synchronisierte Quarzoszillator läuft frei weiter. Dadurch sendet der Transceiver des als aktiver Reflektor arbeitenden Knotens mit einer gleichen oder proportionalen Phasenlage und mit gleicher Frequenz, wie er zuvor ein Trägersignal empfangen hat. An den freilaufenden Oszillator werden dabei sehr hohe Anforderungen hinsichtlich Frequenzkonstanz und Phasenkonstanz gestellt. Störungen, wie beispielsweise ein Übersprechen von Signalen auf dem integrierten Schaltkreis, die Phasenänderungen verursachen können, müssen vermieden werden

Aus der US 6,731,908 B2 ist ein Verfahren zur Bestimmung der Distanz zwischen zwei Objekten für die Bluetooth-Technologie bekannt. Dabei wird die Frequenz durch Frequenzsprünge geändert um einen Phasenoffset für mehrere unterschiedliche Frequenzen zu messen. Ein Objekt weist einen spannungsgesteuerten Quarzoszillator in einer Phasenregelschleife (PLL - engl. Phase Locked Loop) auf, wobei die Phasenregelschleife während des Empfangs geschlossen und während des Sendens geöffnet wird, so dass Empfangssignal und Sendesignal eine gleiche Frequenz aufweisen. Die Phase des lokalen Oszillatorsignals des spannungsgesteuerten Quarzoszillators ist durch die Synchronisation mittels der PLL dabei kohärent zum empfangenen Signal.

Der Erfindung liegt die Aufgabe zu Grunde ein möglichst verbessertes Verfahren zur Entfernungsmessung anzugeben.

Diese Aufgabe wird durch das Verfahren mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein Verfahren zur Entfernungsmessung zwischen zwei Knoten eines Funknetzes vorgesehen.

In dem Verfahren wird vom ersten Knoten ein erstes unmodulierte Trägersignal gesendet und vom zweiten Knoten empfangen. Zudem wird vom zweiten Knoten ein zweites unmoduliertes Trägersignal gesendet und vom ersten Knoten empfangen. Ein unmoduliertes Trägersignal ist beispielsweise eine hochfrequente Sinusschwingung.

Vom ersten Knoten werden ein erster Wert und ein zweiter Wert einer ersten Phase gemessen. Die Messungen erfolgen dabei vorzugsweise auf Zwischenfrequenzebene. Der erste Wert der ersten Phase ist einer ersten Frequenz des empfangenen zweiten Trägersignals zugeordnet. Der zweite Wert der ersten Phase ist einer zweiten Frequenz des empfangenen zweiten Trägersignals zugeordnet. Die erste Frequenz und die zweite Frequenz weisen einen Frequenzunterschied auf. Der Frequenzunterschied ist dabei ausreichend groß um eine auf diesem Frequenzunterschied basierende Messung von Phasenunterschieden durchzuführen. Vorzugsweise ist der Frequenzunterschied durch einen Frequenzabstand von Kanälen des Funknetzes definiert.

Vom zweiten Knoten werden ein dritter Wert und ein vierter Wert einer zweiten Phase gemessen. Die Messungen erfolgen dabei vorzugsweise auf Zwischenfrequenzebene. Der dritte Wert der zweiten Phase ist einer dritten Frequenz des empfangenen ersten Trägersignals zugeordnet. Der vierte Wert der zweiten Phase ist einer vierten Frequenz des empfangenen ersten Trägersignals zugeordnet. Die dritte Frequenz und die vierte Frequenz weisen ebenfalls den Frequenzunterschied auf. Dabei ist es möglich, dass die erste Frequenz und die dritte Frequenz gleich sind, so dass dann ebenfalls die zweite Frequenz und die vierte Frequenz gleich sein können. Alternativ sind sowohl die erste Frequenz und die dritte Frequenz als auch die zweite Frequenz und die vierte Frequenz verschieden. Beispielsweise unterscheiden sich die erste Frequenz und die dritte Frequenz durch einen oder mehrere Frequenzabstände von Kanälen (Kanalabstände) des Funknetzes.

Die Entfernung wird aus dem Frequenzunterschied, aus dem ersten Wert und dem zweiten Wert der ersten Phase und aus dem dritten Wert und dem vierten Wert der zweiten Phase bestimmt wird. Dabei wird vorzugsweise ausgenutzt, dass die Entfernung zu einem Verhältnis von Phasenunterschied zu Frequenzunterschied proportional ist. Vorzugsweise wird (genau) ein Entfernungswert aus dem Frequenzunterschied, aus dem ersten Wert und dem zweiten Wert der ersten Phase und aus dem dritten Wert und dem vierten Wert der zweiten Phase bestimmt. Vorzugsweise wird aus einer Mehrzahl von Entfernungswerten, insbesondere durch Mittelwertbildung, die Entfernung berechnet.

Der Erfindung liegt die Aufgabe zu Grunde ein System zur Entfernungsmessung in einem Funknetz möglichst zu vereinfachen.

Diese Aufgabe wird durch ein System mit den Merkmalen des unabhängigen Anspruchs 7 gelöst. Vorteilhafte Weiterbildungen sind Gegenstand von abhängigen Ansprüchen und in der Beschreibung enthalten.

Demzufolge ist ein System zur Entfernungsmessung zwischen zwei Knoten eines Funknetzes vorgesehen. Vorteilhafterweise ist das Funknetz gemäß dem Industrie-Standard IEEE 802.15.4 ausgebildet. Die Entfernungsmessung kann dabei zwischen zwei beliebigen Knoten des Funknetzes erfolgen, die zur Entfernungsmessung ausgebildet und eingerichtet sind.

Die Entfernungsmessung soll dabei zwischen einem ersten Knoten und einem zweiten Knoten erfolgen. Der erste Knoten ist in einem Modus zur Entfernungsmessung eingerichtet ein erstes unmoduliertes Trägersignal zu senden und ein zweites unmoduliertes Trägersignal zu empfangen. der zweite Knoten ist in einem Modus zur Entfernungsmessung eingerichtet das zweite unmodulierte Trägersignal zu senden und das erste unmodulierte Trägersignal zu empfangen.

Der erste Knoten weist eine erste Phasenmessschaltung zur Messung eines ersten Wertes und eines zweiten Wertes einer ersten Phase des empfangenen zweiten Trägersignals auf.

Der erste Wert der ersten Phase ist einer ersten Frequenz des empfangenen zweiten Trägersignals zugeordnet. Der zweite Wert der ersten Phase ist einer zweiten Frequenz des empfangenen zweiten Trägersignals zugeordnet.

Die erste Frequenz und die zweite Frequenz weisen einen Frequenzunterschied auf.

Der zweite Knoten weist eine zweite Phasenmessschaltung zur Messung eines dritten Wertes und eines vierten Wertes einer zweiten Phase des empfangenen ersten Trägersignals auf.

Der dritte Wert der zweiten Phase ist einer dritten Frequenz des empfangenen ersten Trägersignals zugeordnet. Der vierte Wert der zweiten Phase ist einer vierten Frequenz des empfangenen ersten Trägersignals zugeordnet.

Die dritte Frequenz und die vierte Frequenz weisen ebenfalls den Frequenzunterschied auf. In einer ersten Variante ist die erste Frequenz um den Frequenzunterschied niedriger als die zweite Frequenz und die dritte Frequenz ist um den Frequenzunterschied niedriger als die vierte Frequenz. In einer zweiten Variante ist die erste Frequenz um den Frequenzunterschied höher als die zweite Frequenz und die dritte Frequenz ist um den Frequenzunterschied höher als die vierte Frequenz.

Der erste Knoten und/oder der zweite Knoten und/oder ein weiterer Knoten ist eingerichtet die Entfernung aus dem Frequenzunterschied, aus dem ersten Wert und dem zweiten Wert der ersten Phase und aus dritten Wert und dem vierten Wert der zweiten Phase zu bestimmen. Vorzugsweise werden zu dem Knoten, der die Entfernung bestimmt, - sofern nicht bereits in diesem Knoten gemessen oder bekannt - der Frequenzunterschied, der erste Wert und der zweite Wert der ersten Phase und der dritte Wert und der vierte Wert der zweiten Phase übertragen.

Der Erfindung liegt weiterhin die Aufgabe zu Grunde, eine Schaltung eines Knotens eines Funknetzes für eine Entfernungsmessung anzugeben.

Diese Aufgabe wird durch eine Schaltung mit den Merkmalen des unabhängigen Anspruchs 14 gelöst. Vorteilhafte Weiterbildungen sind Gegenstand von abhängigen Ansprüchen und in der Beschreibung angegeben.

Demzufolge ist eine Schaltung vorgesehen, die zur Entfernungsmessung für einen Knoten eines Funknetzes eingerichtet ist. Die Schaltung ist dabei eingerichtet eine Entfernungsmessung zu einem anderen Knoten des Funknetzes durchzuführen, insbesondere zu initiieren.

Die Schaltung weist eine Sender-Empfänger-Schaltung zum Senden eines ersten unmodulierten Trägersignals und zum Empfang eines zweiten unmodulierten Trägersignals auf. Das erste unmodulierte Trägersignal kann dabei mit unterschiedlichen Frequenzen gesendet werden.

Die Schaltung weist einen Referenztaktgenerator für eine Phasenregelschleife zur Erzeugung eines lokalen Oszillatorsignals auf. Der Referenztaktgenerator weist vorzugsweise einen frei schwingenden Quarzoszillator auf. Das lokale Oszillatorsignal dient dem Heruntermischen des empfangenen zweiten Trägersignals auf ein Zwischenfrequenzsignal durch die Sender-Empfänger-Schaltung. Zum Heruntermischen des empfangenen Funksignals auf ein Zwischenfrequenzsignal mittels des Oszillatorsignals durch die Sender-Empfänger-Schaltung ist die Phasenregelschleife mit der Sender-Empfänger-Schaltung verbunden.

Die Schaltung weist einen Frequenzteiler auf, der mit dem Referenztaktgenerator zur Erzeugung eines Vergleichssignals durch Teilung einer Referenzfrequenz eines Referenzsignals des Referenzgenerators verbunden ist. Vorzugsweise ist ein Teilerfaktor des Frequenzteilers geradzahlig. Die Phase des Referenzsignals bleibt dabei durch die Teilung mittels des Frequenzteilers für das Vergleichssignal erhalten.

Die Schaltung weist eine Phasenmessschaltung auf, die zur Auswertung einer Phase zwischen dem Zwischenfrequenzsignal und dem Vergleichssignal mit der Sender-Empfänger-Schaltung und dem Frequenzteiler verbunden ist. Die Phase des Vergleichssignals dient dabei als Referenz zu der die Phase des Zwischenfrequenzsignals gemessen wird. Das Zwischenfrequenzsignal weist dabei dieselbe Phasenlage wie das empfangene zweite Trägersignal auf. Die Messung der Phase kann beispielsweise mittels Taktzählung erfolgen.

Die Schaltung weist eine mit der Phasenmessschaltung verbundene Steuerschaltung auf, die zur Steuerung von zeitlich synchronisierten Messzeitpunkten der Messung eines ersten Wertes und eines zweiten Wertes der Phase eingerichtet ist. Der erste Wert ist dabei einer ersten Frequenz des empfangen zweiten Trägersignals und der zweite Wert ist einer zweiten Frequenz des empfangen zweiten Trägersignals zugeordnet. Die erste Frequenz und die zweite Frequenz weisen einen Frequenzunterschied auf. Die Messzeitpunkte können beispielsweise vorbestimmt sein oder durch Vereinbarung (zwischen Knoten) festgelegt sein.

Vorzugsweise ist die Schaltung zum Empfang und/oder Senden von gemessenen Werten der Phase von/zu einem anderen Knoten eingerichtet, um die Entfernung zu bestimmen. Besonders bevorzugt ist die Schaltung eingerichtet die Entfernung aus dem Frequenzunterschied, aus dem gemessenen ersten Wert und dem gemessenen zweiten Wert der Phase und aus von einem anderen Knoten empfangenen Werten einer Phase zu bestimmen. Die empfangenen Werte sind dabei von einem Knoten an die Schaltung gesendet, zum dem die Entfernung durch die Schaltung bestimmbar ist.

Die im Folgenden beschriebenen Weiterbildungen beziehen sich sowohl auf das System, als auch auf das Verfahren als auch auf die Schaltung. Funktionen der Schaltung und des Systems ergeben sich dabei aus Verfahrensmerkmalen. Verfahrensmerkmale ergeben sich aus Funktionen des Systems oder der Schaltung.

In einer vorteilhaften Weiterbildung ist vorgesehen, dass eine zeitliche Synchronisation der Messungen der Werte durchgeführt wird. Die zeitliche Synchronisation wird dabei derart durchgeführt, dass Messzeitpunkte der Messungen der Werte, also des ersten, zweiten, dritten und vierten Wertes eine vorbestimmte zeitliche Beziehung zueinander aufweisen.

Besonders bevorzugt sind ein erster zeitlicher Abstand und ein zweiter zeitlicher Abstand gleich. Bevorzugt ist der erste zeitliche Abstand zwischen einem ersten Messzeitpunkt des ersten Wertes der ersten Phase und einem zweiten Messzeitpunkt des zweiten Wertes der ersten Phase definiert. Der zweite zeitliche Abstand ist bevorzugt zwischen einem dritten Messzeitpunkt des dritten Wertes der zweiten Phase und einem vierten Messzeitpunkt des vierten Wertes der zweiten Phase definiert. Diese zeitliche Beziehung bewirkt, dass auch ein dritter Zeitabstand zwischen dem ersten Messzeitpunkt und dem dritten Messzeitpunkt gleich ist einem vierten Zeitabstand zwischen dem zweiten Messzeitpunkt und dem vierten Messzeitpunkt.

Bevorzugt sind die Zeitabstände vorbestimmt. Die Zeitabstände werden also nicht aus der laufenden Messung erst ermittelt. Vorzugsweise sind die Zeitabstände fest vorgeben, beispielsweise als Parametersatz implementiert. Alternativ können die Zeitabstände auch für eine Entfernungsmessung zwischen den Knoten vereinbart werden. Hierzu sind die Knoten entsprechend eingerichtet. Vorteilhafterweise sind die Knoten zur Messung der Werte der Phasen in den Zeitabständen durch Speicherung des zu dem Messzeitpunkt aktuellen Wertes der Phase eingerichtet, wobei die Werte der Phase fortlaufend ermittelt werden. Alternativ sind die Knoten eingerichtet die Werte der Phase nur zu dem Messzeitpunkt zu Messen und den gemessenen Wert abzuspeichern.

In einer bevorzugten Weiterbildung wird zur Bestimmung der Entfernung eine Phasendifferenz aus dem ersten Wert und dem zweiten Wert der ersten Phase und aus dem dritten Wert und dem vierten Wert der zweiten Phase berechnet. Bevorzugt erfolgt die Berechnung anhand der Formel:

$$\Delta\varphi = \left(\varphi_{A2} - \varphi_{B2}\right) - \left(\varphi_{A1} - \varphi_{B1}\right)$$

Dabei umfasst die Formal natürlich auch alle algebraischen Umformungen ihrer Terme. In der Formel ist $\varphi_{A1}$ der erste Wert und $\varphi_{A2}$ ist der zweite Wert der ersten Phase. $\varphi_{B1}$ ist der dritte Wert und $\varphi_{B2}$ ist der vierte Wert der zweiten Phase.

Gemäß einer vorteilhaften Ausgestaltung wird das erste unmodulierte Trägersignal mittels eines ersten Oszillatorsignals durch einen ersten Referenztaktgenerator und eine erste Phasenregelschleife des ersten Knotens erzeugt. Vorteilhafterweise wird das zweite unmodulierte Trägersignal mittels eines zweiten Oszillatorsignals durch einen zweiten Referenztaktgenerator und eine zweite Phasenregelschleife des zweiten Knotens erzeugt.

Durch eine Phasenmessschaltung des ersten Knotens werden der erste Wert und der zweite Wert der ersten Phase des empfangenen zweiten Trägersignals des zweiten Knotens relativ zu einem ersten Referenzsignal des ersten Referenztaktgenerators gemessen. Durch eine Phasenmessschaltung des zweiten Knotens werden der dritte Wert und der vierte Wert der zweiten Phase des empfangenen ersten Trägersignals des ersten Knotens relativ zu einem zweiten Referenzsignal des zweiten Referenztaktgenerators gemessen. Die Messungen erfolgen dabei vorzugsweise auf Zwischenfrequenzebene.

Erzeugen der erste Referenztaktgenerator und der zweite Referenztaktgenerator das erste Referenzsignal und das zweite Referenzsignal mit unterschiedlicher Frequenz, verursacht die fehlende Synchronisation der Frequenzen der Referenztaktgeneratoren einen zeitabhängigen Phasenfehler. Für eine Herausrechnung des Phasenfehlers bei der Bestimmung der Entfernung zwischen den Knoten werden vorzugsweise die Messungen des ersten Wertes und des zweiten Wertes der ersten Phase und des dritten Wertes und des vierten Wertes der zweiten Phase im ersten Knoten und im zweiten Knoten durch eine zeitliche vorgegebene Beziehung der vier Messzeitpunkte zeitlich synchronisiert.

Gemäß einer bevorzugten Ausgestaltung sind eine erste Referenzfrequenz des ersten Referenztaktgenerators und eine zweite Referenzfrequenz des zweiten Referenztaktgenerators zur Entfernungsmessung unsynchronisiert. Die Referenztaktgeneratoren sind nicht gekoppelt, so dass die erste Referenzfrequenz und die zweite Referenzfrequenz ungleich sein können. Im Gegensatz zu synchronisierten Frequenzgeneratoren weisen das erste Oszillatorsignal und das zweite Oszillatorsignal keine feste Frequenzbeziehung zueinander auf.

Vorzugsweise werden eine erste Referenzfrequenz des ersten Referenztaktgenerators und eine zweite Referenzfrequenz des zweiten Referenztaktgenerators zur Entfernungsmessung unsynchronisiert erzeugt. Gemäß einer bevorzugten Ausgestaltungsvariante wird ein durch die insbesondere unsynchronisiert erzeugte erste Referenzfrequenz und zweite Referenzfrequenz verursachter Phasenfehler kompensiert. Der Phasenfehler wird vorzugsweise kompensiert, indem durch Subtraktion des ersten Wertes vom zweiten Wert der ersten Phase und des dritten Wertes vom vierten Wert der zweiten Phase der Phasenfehler sich überwiegend aufhebt.

Beispielsweise weisen das erste Trägersignal und das zweite Trägersignal eine gleiche Frequenz auf. Alternativ sind die erste Frequenz des ersten Trägersignals und die dritte Frequenz des zweiten Trägersignals unterschiedlich. Vorteilhafterweise unterscheiden sich die erste Frequenz des ersten Trägersignals und die dritte Frequenz des zweiten Trägersignals um den Betrag einer Zwischenfrequenz.

Gemäß einer vorteilhaften Weiterbildung ist vorgesehen, dass der erste Knoten eine erste Steuerschaltung und der zweite Knoten eine zweite Steuerschaltung zur zeitlichen Synchronisation der Messungen aufweisen. Die erste Steuerschaltung ist eingerichtet einen ersten Messzeitpunkt des ersten Wertes der ersten Phase und einen zweiten Messzeitpunkt des zweiten Wertes der ersten Phase zu steuern. Hierzu sendet die erste Steuerschaltung beispielsweise einen Triggerimpuls als Steuersignal an die erste Phasenmessschaltung.

Entsprechend ist die zweite Steuerschaltung vorzugsweise eingerichtet einen dritten Messzeitpunkt des dritten Wertes der zweiten Phase und einen vierten Messzeitpunkt des vierten Wertes der zweiten Phase zu steuern. Hierzu sendet die zweite Steuerschaltung beispielsweise einen Triggerimpuls als Steuersignal an die zweite Phasenmessschaltung. Ein erster zeitlicher Abstand zwischen dem ersten Messzeitpunkt und dem zweiten Messzeitpunkt und ein zweiter zeitlicher Abstand zwischen dem dritten Messzeitpunkt und dem vierten Messzeitpunkt sind gleich.

In einer ersten Ausgestaltungsvariante ist der zeitliche Abstand fest vorgegeben und beträgt beispielsweise eine feste Anzahl von Takten des Referenztaktgenerators. In einer zweiten alternativen Ausgestaltungsvariante ist der zeitliche Abstand zwischen dem ersten Knoten und dem zweiten Knoten zu vereinbaren. Zur Vereinbarung des zeitlichen Abstands sendet beispielsweise der erste Knoten einen zugehörigen Parameter an den zweiten Knoten, der den zeitlichen Abstand anhand des Parameters einstellt. Beispielsweise wird durch den Parameter ein Endwert eines Timers eingestellt.

Gemäß eine besonders vorteilhaften Ausgestaltung weist der erste Knoten einen ersten Referenztaktgenerator für eine erste Phasenregelschleife zur Erzeugung eines ersten Oszillatorsignals auf. Das Oszillatorsignal wird auch als LO-Signal (LO - engl. Local Oscillator) bezeichnet. Der erste Knoten weist eine erste Sender-Empfänger-Schaltung auf, der das erste Oszillatorsignal bereitgestellt wird. Beispielsweise ist die erste Phasenregelschleife mit einem ersten Mischer der ersten Sender-Empfänger-Schaltung zum Heruntermischen des empfangenen zweiten Trägersignals mittels des ersten Oszillatorsignals verbunden. Ebenfalls kann das erste Oszillatorsignal zur Erzeugung einer ersten Trägerfrequenz zum Senden des ersten Trägersignals verwendet werden. Das erste Oszillatorsignal weist eine erste Oszillatorfrequenz auf. Die erste Oszillatorfrequenz ist vorzugsweise mittels eines ersten Multiplikatorfaktors der ersten Phasenregelschleife beispielsweise in Stufen einstellbar.

Vorzugsweise weist der zweite Knoten einen zweiten Referenztaktgenerator für eine zweite Phasenregelschleife zur Erzeugung eines zweiten Oszillatorsignals mit einer zweiten Oszillatorfrequenz auf. Die zweite Oszillatorfrequenz ist vorzugsweise mittels eines zweiten Multiplikatorfaktors der zweiten Phasenregelschleife beispielsweise in Stufen einstellbar.

Vorzugsweise sind der erste Knoten und der zweite Knoten zu einem zeitversetzten Senden des ersten Trägersignals und des zweiten Trägersignals eingerichtet. Vorzugsweise ist der erste Knoten zur Messung des ersten Wertes und des zweiten Wertes der ersten Phase des empfangenen zweiten Trägersignals relativ zu einem ersten Referenzsignal des ersten Referenztaktgenerators ausgebildet. Das Referenzsignal kann auch als Referenztakt bezeichnet werden.

Vorzugsweise ist der zweite Knoten zur Messung des dritten Wertes und des vierten Wertes der zweiten Phase des empfangenen ersten Trägersignals relativ zu einem zweiten Referenzsignal des zweiten Referenztaktgenerators ausgebildet. Vorzugsweise werden die Werte der ersten Phase und der zweiten Phase auf Zwischenfrequenzebene gemessen, indem das empfangene erste Trägersignal und entsprechend das empfangene zweite Trägersignal mittels eines Mischers einer Sender-Empfänger-Schaltung des jeweiligen Knotens heruntergemischt werden. Vorteilhafterweise wird eine Vielzahl von Messungen für eine Vielzahl von Trägerfrequenzen durchgeführt, wobei der erste Knoten eingerichtet ist jeweils den ersten Wert und den zweiten Wert der ersten Phase zu messen, und wobei der zweite Knoten eingerichtet ist jeweils den dritten Wertes und den vierten Wertes der zweiten Phase zu messen. Somit wird vorzugsweise eine Serie von Werten der Phasen gemessen, wobei die Messung für eine Serie unterschiedlicher Frequenzen des ersten Trägersignals und für eine Serie unterschiedlicher Frequenzen des zweiten Trägersignals erfolgt.

Erzeugen der erste Referenztaktgenerator und der zweite Referenztaktgenerator das erste Referenzsignal und das zweite Referenzsignal mit unterschiedlicher Frequenz, verursacht die fehlende Synchronisation der Frequenz einen zeitabhängigen Phasenfehler. Zur Herausrechnung des Phasenfehlers bei der Bestimmung der Entfernung zwischen den Knoten sind der erste Knoten und der zweite Knoten zur zeitlichen Synchronisation der Messungen des ersten Wertes und des zweiten Wertes der ersten Phase und des dritten Wertes und des vierten Wertes der zweiten Phase eingerichtet.

Gemäß einer vorteilhaften Ausgestaltung sind eine erste Referenzfrequenz des ersten Referenztaktgenerators und eine zweite Referenzfrequenz des zweiten Referenztaktgenerators zur Entfernungsmessung unsynchronisiert.

In einer anderen Ausgestaltung sind die Knoten eingerichtet für eine erste Frequenz des ersten Trägersignals und zweiten Trägersignals den ersten Wert der ersten Phase und den dritten Wert der zweiten Phase in einem ersten Zeitabstand zu messen. Vorzugsweise sind die Knoten eingerichtet für eine zweite Frequenz des ersten Trägersignals und zweiten Trägersignals den zweiten Wert der ersten Phase und den vierten Wert der zweiten Phase in einem zweiten Zeitabstand zu messen. Der erste Zeitabstand und der zweite Zeitabstand sind gleich. Die erste Frequenz und die zweite Frequenz weisen einen Frequenzunterschied auf.

Gemäß einer vorteilhaften Weiterbildung weist der erste Knoten einen ersten Frequenzteiler zur Bereitstellung eines ersten Vergleichssignals aus dem ersten Referenzsignal auf. Hierzu wird eine erste Referenzfrequenz des ersten Referenzsignals durch einen ersten Teilerfaktor des ersten Frequenzteilers geteilt, wobei die Phasenlage des ersten Referenzsignals für das erste Vergleichssignal erhalten bleibt.

Gemäß einer vorteilhaften Weiterbildung weist der zweite Knoten einen zweiten Frequenzteiler zur Bereitstellung eines zweiten Vergleichssignals aus dem zweiten Referenzsignal auf. Hierzu wird eine zweite Referenzfrequenz des zweiten Referenzsignals durch einen zweiten Teilerfaktor des zweiten Frequenzteilers geteilt, wobei die Phasenlage des zweiten Referenzsignals für das zweite Vergleichssignal erhalten bleibt.

Vorzugsweise gleicht eine erste Vergleichsfrequenz des ersten Vergleichssignals einer ersten Zwischenfrequenz eines ersten Zwischenfrequenzsignals. Vorzugsweise gleicht eine zweiten Vergleichsfrequenz des zweiten Vergleichssignals einer zweiten Zwischenfrequenz eines zweiten Zwischenfrequenzsignals.

Vorzugsweise ist die erste Referenzfrequenz des ersten Referenztaktgenerators ist ein gerades Vielfaches des ersten Vergleichsfrequenz. Vorzugsweise ist die zweite Referenzfrequenz des zweiten Referenztaktgenerators ist ein gerades Vielfaches des zweiten Vergleichsfrequenz. Vorzugsweise ist die Trägerfrequenz ein gerades Vielfaches der Zwischenfrequenz.

In einer vorteilhaften Ausgestaltung ist vorgesehen, dass der erste Knoten zur Änderung der ersten Trägerfrequenz des ersten Trägersignals und der zweite Knoten zur Änderung einer Trägerfrequenz des zweiten Trägersignals ausgebildet sind. Vorzugsweise sind die Knoten eingerichtet einen ersten Multiplikatorfaktor der ersten Phasenregelschleife und einen zweiten Multiplikatorfaktor der zweiten Phasenregelschleife um den denselben Wert zu ändern. Der erste Multiplikatorfaktor der ersten Phasenregelschleife dient zur Multiplikation der ersten Referenzfrequenz des ersten Referenztaktgenerators. Der zweite Multiplikatorfaktor der zweiten Phasenregelschleife dient zur Multiplikation der zweiten Referenzfrequenz des zweiten Referenztaktgenerators. Ziel ist es die erste Trägerfrequenz und die zweite Trägerfrequenz um denselben Frequenzoffset zu ändern, so dass die Frequenzdifferenz zwischen der ersten Trägerfrequenz und der zweiten Trägerfrequenz konstant bleibt.

Gemäß einer vorteilhaften Weiterbildung sind die Knoten zur ersten Übertragungen des ersten Trägersignals mit der ersten Trägerfrequenz und des zweiten Trägersignal mit der zweiten Trägerfrequenz mit einem Zeitabstand und zur zweiten Übertragungen des ersten Trägersignals mit einer geänderten ersten Trägerfrequenz und des zweiten Trägersignals mit einer geänderten zweiten Trägerfrequenz mit dem gleichen Zeitabstand eingerichtet. Vorzugsweise senden der erste Knoten und der zweite Knoten abwechselnd.

Bevorzugt ist der zweite Knoten zur Messdatenübertragung der gemessenen Werte der zweiten Phase an den ersten Knoten eingerichtet. Bevorzugt ist der erste Knoten zur Berechnung einer Entfernung aus den Werten der ersten Phase und den Werten der zweiten Phase eingerichtet. In einer alternativen Ausgestaltung ist der erste Knoten zur Messdatenübertragung der gemessenen Werte der ersten Phase an den zweiten Knoten eingerichtet. Bevorzugt ist dabei der zweite Knoten zur Berechnung einer Entfernung aus den Werten der ersten Phase und den Werten der zweiten Phase eingerichtet.

In einer Ausgestaltungsvariante ist vorteilhafterweise vorgesehen, dass der erste Knoten und/oder der zweite Knoten zur Übertragung und Auswertung eines (standard-konformen) Rahmens zur zeitlichen Synchronisation der Messzeitpunkte eingerichtet ist.

In einer besonders vorteilhaften Weiterbildung weist der erste Knoten und/oder der zweite Knoten eine Steuerschaltung auf. Die Steuerschaltung ist ausgebildet in Abhängigkeit von dem Rahmen zur Synchronisation mittels eines Timers die Messzeitpunkte zu steuern.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen

Fig. 1    schematische Blockschaltbilder zweier Schaltungen von Knoten eines Funknetzes,

Fig. 2    ein schematisches Diagramm zur Bestimmung der Phase,

Fig. 3    ein erstes schematisches Diagramm mit Phasenmessungen zweier Knoten eines Funknetzes, und

Fig. 4    ein zweites schematisches Diagramm mit Phasenmessungen zweier Knoten eines Funknetzes.

Entfernungsmessungen in einem Funknetz mit mehreren Knoten können auf Phasenmessungen basieren. Dabei wird nacheinander ein beispielsweise unmoduliertes Trägersignal mit der Frequenz fa und ein unmoduliertes Trägersignal mit der Frequenz fb gesendet. Die Frequenzen unterscheiden sich nur durch eine kleine Differenzfrequenz $\Delta f$. Im Empfänger wird die Phase der empfangenen Welle ausgewertet und als Messwerte $\varphi 1$ und $\varphi 2$ abgelegt. Daraus lässt sich die Entfernung d zwischen den Stationen berechnen:

$$d = \frac{(\varphi 2 - \varphi 1)c}{2\pi\Delta f}$$

(1)

Dabei ist c die Lichtgeschwindigkeit.

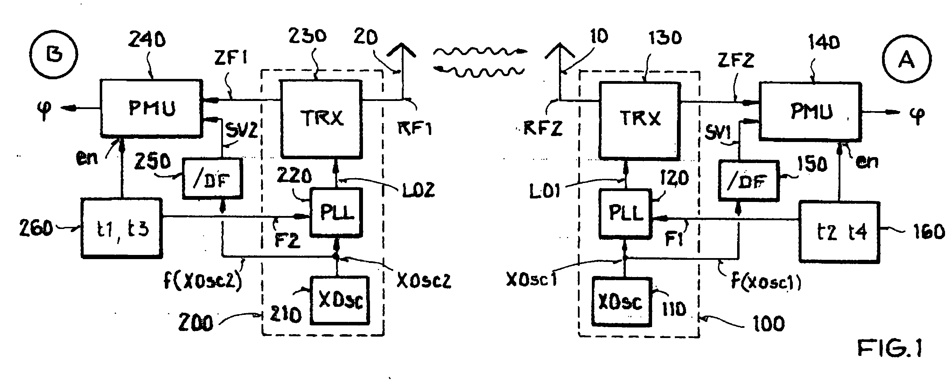

In Fig. 1 sind zwei Schaltungen eines ersten Knotens A und eines zweiten Knotens B dargestellt, wobei keiner der Knoten A, B als reiner aktiver Reflektor arbeitet. Die Schaltung des ersten Knotens A weist eine mit einer Antenne 10 verbindbare oder verbundene Sender-Empfänger-Schaltung 130 (TRX) auf. Der ersten Sender-Empfänger-Schaltung 130 (TRX) wird mittels eines ersten Quarzoszillators 110 als Referenztaktgenerator (XOSC1) und einer ersten Phasenregelschleife 120 (PLL - engl. Phase Locked Loop) ein erstes lokales Oszillatorsignal LO1 bereitgestellt. Die Anordnung aus erster Sender-Empfänger-Schaltung 130, erster Phasenregelschleife 120 und erstem Referenztaktgenerator 110 kann auch als Radio 100 bezeichnet werden.

Die Schaltung des ersten Knotens A weist weiterhin einen ersten Frequenzteiler 150 auf, der im Ausführungsbeispiel der Fig. 1 die erste Referenzfrequenz f(XOSC1) des ersten Referenzsignals XOSC1 des ersten Referenztaktgenerators 110 durch den ersten Teilerfaktor DF - beispielsweise durch acht - teilt zur Bereitstellung eines ersten Vergleichssignals SV1 mit einer ersten Vergleichsfrequenz f(SV1) von beispielsweise etwa 2 MHz. Eingänge einer ersten Phasenmessschaltung 140 (PMU - engl. Phase Measurement Unit) der Schaltung des ersten Knotens A sind mit dem ersten Frequenzteiler 150 und der ersten Sender-Empfänger-Schaltung 130 verbunden. Die erste Sender-Empfänger-Schaltung 130 ist zum Heruntermischen eines vom zweiten Knoten B empfangenen zweiten Trägersignals RF2 auf ein Zwischenfrequenzsignal ZF2 ausgebildet. Das Zwischenfrequenzsignal ZF2 weist im Ausführungsbeispiel der Fig. 1 eine Zwischenfrequenz f(ZF2) von beispielsweise etwa 2 MHz auf.

Die Phase φ des empfangenen Trägersignals RF2 wird mit der ersten Phasenmessschaltung 140 gemessen, die auch als Phasedetektor bezeichnet werden kann. Die Messung erfolgt auf Zwischenfrequenzebene, da bei der Frequenzumsetzung in einem Mischer der ersten Sender-Empfänger-Schaltung 130 die Phasenlage des vom zweiten Knoten B gesendeten zweiten Trägersignals RF2 erhalten bleibt. Die erste Phasenmessschaltung 140 ist also zur Messung des Phasenunterschieds zwischen dem Zwischenfrequenzsignal ZF2 und der heruntergeteilten Referenzfrequenz als erstes Vergleichssignal SV1 ausgebildet.

Im Ausführungsbeispiel der Fig. 1 ist die Schaltung des zweiten Knotens B gleich der des ersten Knotens A aufgebaut. Die Schaltung des zweiten Knotens B weist ebenfalls eine zweite Sender-Empfänger-Schaltung 230 auf, die mit einer Antenne 20 verbindbar oder verbunden ist. Der zweiten Sender-Empfänger-Schaltung 230 wird mittels eines zweiten Quarzoszillators 210 als zweiter Referenztaktgenerator (XOSC2) und einer zweiten Phasenregelschleife 220 ein zweites lokales Oszillatorsignal LO2 bereitgestellt. Die Anordnung aus zweiter Sender-Empfänger-Schaltung 230, zweiter Phasenregelschleife 220 und zweitem Referenztaktgenerator 210 kann auch als Radio 200 bezeichnet werden.

Die Schaltung des zweiten Knotens B weist ebenfalls einen zweiten Frequenzteiler 250 zur Bereitstellung eines zweiten Vergleichssignals SV2 an einem Eingang einer zweiten Phasenmessschaltung 240 auf. Der zweite Frequenzteiler 250 ist zur Herunterteilung der zweiten Referenzfrequenz f(XOSC2) des zweiten Referenzsignals XOSC2 des zweiten Referenztaktgenerators 210 um den zweiten Teilerfaktor DF mit dem zweiten Referenztaktgenerator 210 der Schaltung des zweiten Knotens verbunden. Die Phase φ des empfangenen ersten Trägersignals RF1 wird mit der zweiten Phasenmessschaltung 240 gemessen. Hierzu ist ein Eingang der zweiten Phasenmessschaltung 240 mit einem Ausgang der zweiten Sender-Empfänger-Schaltung 230 verbunden. Die zweite Phasenmessschanung 240 ist zur Messung des Phasenunterschieds zwischen einem Zwischenfrequenzsignal ZF1 und dem zweiten Vergleichssignal SV2 ausgebildet.

Die Referenztaktgeneratoren 110 und 210 sind als Quarzoszillatoren ausgebildet und voneinander entkoppelt. Aufgrund von Fertigungsschwankungen oder unterschiedlichen Temperaturen können die erste Referenzfrequenz f(XOSC1) des ersten Referenztaktgenerators 110 des ersten Knotens A und die zweite Referenzfrequenz f(XOSC2) des zweiten Referenztaktgenerators 210 des zweiten Knotens B voneinander abweichen. Da die erste Referenzfrequenz f(XOSC1) des ersten Referenztaktgenerators 110 des ersten Knotens A und die zweite Referenzfrequenz f(XOSC2) des zweiten Referenztaktgenerators 210 des zweiten Knotens B unsynchronisiert sind, ist eine zeitliche Synchronisation der Messungen der Phase im ersten Knoten A und der Messungen der Phase im zweiten Knoten B zur Berücksichtigung des durch den Frequenzoffset zwischen dem ersten Referenztaktgenerator 110 und dem zweiten Referenztaktgenerator 210 bedingten Phasenfehlers besonders vorteilhaft.

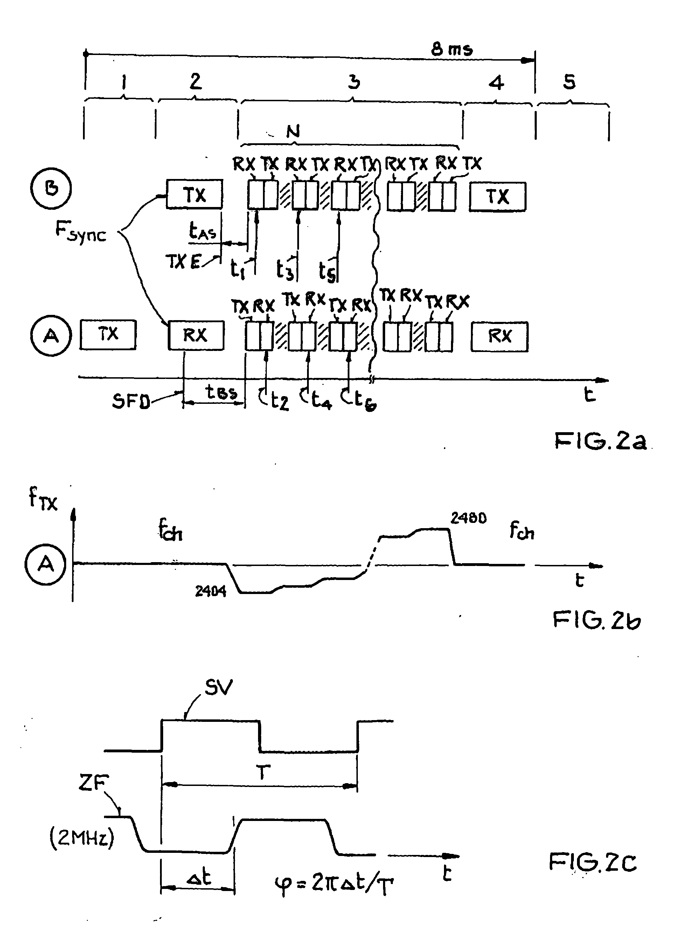

Ein Ablauf eines Messverfahrens ist in den Figuren 2a und 2b schematisch als Diagramm dargestellt. Der erste Knoten A initialisiert die Entfernungsmessung und sendet im Schritt 1 einen Rahmen an den zweiten Knoten B mit dem Befehl eine Entfernungsmessung auszuführen. Die Sendefrequenz fTX ist dabei auf die Kanalfrequenz fch zur Kommunikation im Funknetz eingestellt. Mit dem Rahmen wird dem zweiten Knoten B eine Reihenfolge der Messfrequenzen oder Frequenzschritte übermittelt. Die Messfrequenzen sind dabei die Trägerfrequenzen der unmodulierten Trägersignale RF1, RF2. Alternativ kann die Reihenfolge der Messfrequenzen (Trägerfrequenzen) für eine Phasenmessung auch fest vorgegeben sein.

Im Schritt 2 des Verfahrens der Fig. 2a sendet der zweite Knoten B einen Rahmen Fsync zur zeitlichen Synchronisation des weiteren Verfahrensablaufs der Entfernungsmessung an den ersten Knoten A. Der Rahmen Fsync zur zeitlichen Synchronisation ist beispielsweise ein Standard-Rahmen, der standardgemäß (bspw. Industrie-Standard IEEE 802.15.4) ausgebildet ist und beispielsweise eine Präambel, einen Daten-Kopf und zu übertragende Daten aufweisen kann. Zur Synchronisation ist dabei keine Datenübertragung erforderlich, so dass ein leerer Rahmen übertragen werden kann. Dabei ist die Zeit, die für die Übertragung - d.h. für das Senden durch den zweiten Knoten B und das Empfangen durch den ersten Knoten A - des Rahmens Fsync zur zeitlichen Synchronisation benötigt wird, bekannt. Die Zeit zur Synchronisation ist beispielsweise in Symbole mit einer Symbollänge eingeteilt. Der zweite Knoten startet ausgehend vom Endzeitpunkt TXE des gesendeten Rahmens Fsync einen Timer mit der Länge tAS, der zum Start der Entfernungsmessung endet. Der erste Knoten A startet ebenfalls einen Timer mit der Länge tBS, der ebenfalls zum Start der Entfernungsmessung endet. Der Timer des ersten Kotens A wird durch die Bestimmung eines Zeitpunktes SFD (entspricht im Industrie-Standard IEEE 802.15.4 einem Indikator eines Endes der Präambel im Rahmen) im empfangenen Rahmen Fsync zur zeitlichen Synchronisation gestartet.

Ausgehend von dem Ablauf des Timers des zweiten Knotens B werden die Messzeitpunkte t1, t3, t5 usw. zur Messung der Phase festgelegt. Ausgehend von dem Ablauf des Timers des ersten Knotens werden die Messzeitpunkte t2, t4, t6 usw. zur Messung der Phase festgelegt. Für eine Bestimmung der Entfernung ist es dabei erforderlich, dass der zeitliche Abstand zwischen den Messzeitpunkten t1, t3, t5 usw. im zweiten Knoten B und der zeitliche Abstand zwischen den Messzeitpunkten t2, t4, t6 usw. im ersten Knoten gleich und konstant ist. Der zeitliche Abstand ist vorbestimmt. Der vorbestimmte zeitliche Abstand kann fest implementiert sein. Alternativ wird zur Vorbestimmung der zeitliche Abstand zwischen den Knoten A, B vereinbart. Über die in Fig. 2a dargestellten Messzeitpunkte hinaus sind für die N Messungen weitere Messzeitpunkte im gleichen zeitlichen Abstand erforderlich, die in der vereinfachten Darstellung der Fig. 2a nicht dargestellt sind.

Im Schritt 3 wird die Sendefrequenz fTX von der vorhergehenden Kommunkationsfrequenz fch auf die niedrigste Frequenz umgeschaltet. Innerhalb der Zeiten tAS und tBS zum Ablauf der Timer schwingen sich die Phasenregelschleifen der Knoten A, B ein. Die Einstellung der niedrigsten Frequenz beispielsweise auf den Wert 2404 MHz ist in Fig. 2b schematisch dargestellt. Zunächst sendet der Knoten A ein unmoduliertes erstes Trägersignal RF1 im Sendemodus TX. Währendessen empfängt der zweite Knoten B im Empfangsmodus RX das erste Trägersignal und misst einen dritten Wert die Phase zum Zeitpunkt t1 und speichert den Phasenwert. Anschließend sendet der zweite Knoten B ein unmoduliertes zweites Trägersignal RF2 und im ersten Knoten A wird zum Messzeitpunkt t2 ein erster Phasenwert gemessen und gespeichert. Danach wird die Sendefrequenz fTX jeweils um einen Frequenzschritt Δf erhöht und die Phasenregelschleifen schwingen sich erneut neu ein. Danach werden zu den Messzeitpunkten t3 und t4 neue Messungen durchgeführt und zum Zeitpunkt t3 ein vierter Phasenwert und zum Zeitpunkt t4 ein zweiter Phasenwerte gemessen und gespeichert. Dieser Ablauf wiederholt sich bis zur höchsten Frequenz im Band beispielsweise 2480 MHz. Die Erhöhung ist in Fig. 2b schematisch dargestellt. Im Schritt 3 werden demzufolge N Messungen mit unterschiedlichen Sendefrequenzen fTX durchgeführt.

Im Schritt 4 schalten beide Knoten A, B auf die Netzwerkfrequenz fch zurück. Der zweite Knoten B sendet die gemessenen und gespeicherten Phasenwerte an den ersten Knoten A mittels einer Standard-Kommunikation im Funknetz zurück. Der Knoten A berechnet aus diesen Phaseninformationen und eigenen Phasenmessungen die Distanz d zwischen den Knoten A, B im Schritt 5.

Ein Ausführungsbeispiel für eine Phasenmessung ist als Diagramm in Fig. 2c schematisch dargestellt. Die Phase φ berechnet sich zu:

$$\varphi = 2\pi\Delta t \, / \, T \qquad\qquad\qquad (2)$$

Dabei ist Δt die Zeitdifferenz zwischen einer positiven Flanke des Vergleichssignals SV und einer positiven Flanke des Zwischenfrequenzsignals ZF. T ist eine Periode des Vergleichssignals SV. Entsprechend könnten auch fallende Flanken beider Signals SV, ZF verwendet werden.

Durch die konstanten und gleichen Zeitabstände zwischen den aufeinander folgenden Messzeitpunkten t1, t3, t5 bzw. t2, t4, t6 wird eine Synchronisation der Frequenz der beiden Referenzgeneratoren nicht benötigt. So kann mit Hilfe der Festlegung der Messzeitpunkte t1, t3, t5 zueinander und t2, t4, t6 zueinander auf eine aufwendige Frequenzregelschleife verzichtet werden. Die Schaltung eines Knotens A/B kann deutlich vereinfacht und in einen Industrie-Standard, wie den IEEE 802.15.4 ohne größeren Mehraufwand implementiert werden. Dabei wird davon ausgegangen, dass ein Phasenfehler, der zwischen den Messzeitpunkten t1 und t2 aufgrund des Frequenzoffsets zwischen den Referenztaktgeneratoren 110 und 210 auftritt, in gleicher Höhe zwischen den Messzeitpunkten t3 und t4 auftritt, so dass diese beiden Phasenfehler voneinander subtrahiert werden können.

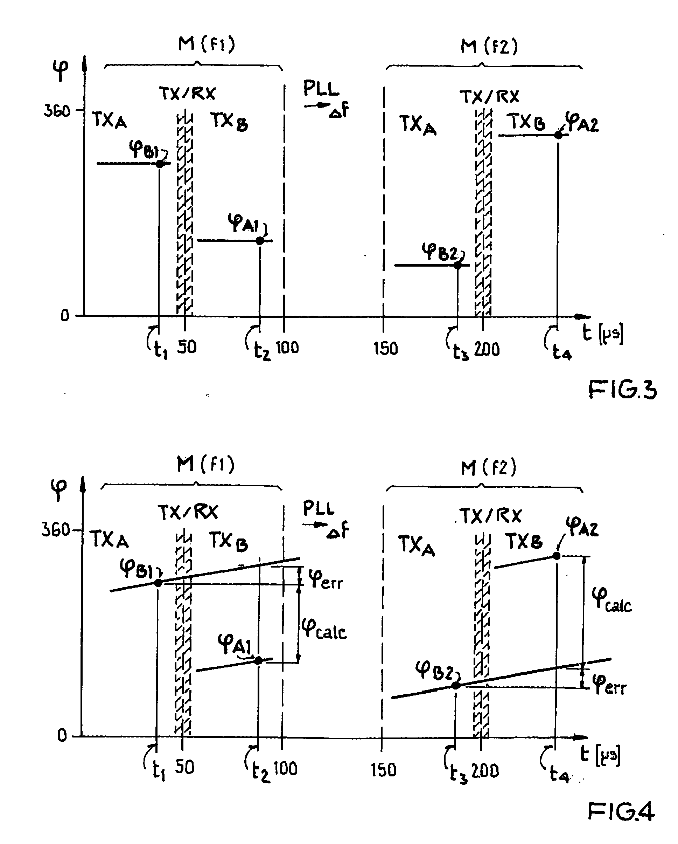

Ein Diagramm für einen Messablauf ist in Fig. 3 schematisch dargestellt. In dem Verfahren zur Entfernungsmessung zwischen dem ersten Knoten A und dem zweiten Knoten B wird vom ersten Knoten A ein erstes unmoduliertes Trägersignal RF1 mit einer Trägerfrequenz f1 gesendet und vom zweiten Knoten B empfangen. Vom zweiten Knoten B wird ein zweites unmoduliertes Trägersignal RF2 mit der Trägerfrequenz f1 gesendet und vom ersten Knoten A empfangen.

Vom ersten Knoten A wird ein erster Wert φA1 einer ersten Phase zu einem ersten Messzeitpunkt t2 gemessen. Vom zweiten Knoten B wird ein dritter Wert φB1 einer zweiten Phase zu einem dritten Messzeitpunkt t1 gemessen.

Danach erfolgt eine Erhöhung der Trägerfrequenz um einen Frequenzunterschied Δf auf die erhöhte Trägerfrequenz f2. Mit der erhöhten Trägerfrequenz f2 wird vom ersten Knoten A das erste unmodulierte Trägersignal RF1 mit der erhöhten Trägerfrequenz f2 gesendet und vom zweiten Knoten B empfangen. Vom zweiten Knoten B wird das zweite unmodulierte Trägersignal RF2 mit der erhöhten Trägerfrequenz f2 gesendet und vom ersten Knoten A empfangen.

Vom ersten Knoten A wird ein zweiter Wert φA2 der ersten Phase zu einem zweiten Messzeitpunkt t4 gemessen. Vom zweiten Knoten B wird ein vierter Wert φB2 einer zweiten Phase zu einem vierten Messzeitpunkt t3 gemessen.

Im eher theoretischen Fall der Figur 3 besteht zwischen den Frequenzen f(XOSC1), f(XOSC2) des ersten Referenztaktgenerators 110 und des zweiten Referenztaktgenerators 210 kein Frequenzoffset. Fig. 3 soll zunächst den eher theoretischen Fall darstellen, dass die Frequenzen f(XOSC1), f(XOSC2) der Referenztaktgeneratoren 110, 210 exakt gleich sind. Die gemessene Phase φ ist also über die Zeit t konstant.

Im Ausführungsbeispiel der Fig. 3 sendet zuerst der erste Knoten A und der dritte Wert φB1 der zweiten Phase wird zum dritten Zeitpunkt t1 im zweiten Knoten B gemessen. Danach sendet der zweite Knoten B und der erste Wert φA1 der ersten Phase wird zum ersten Zeitpunkt t2 im ersten Knoten A gemessen. Zwischen den Phasenmessungen M(f1) schalten die Knoten A, B zwischen Senden und Empfangen TX/RX um. Beide Messungen erfolgen im theoretischen Fall der Fig. 3 bei der Frequenz f1.

Danach wird in beiden Schaltungen der Knoten A, B die Trägerfrequenz um den gleichen Frequenzbetrag $\Delta f$ erhöht. Die Phasenregelschleifen 120, 220 benötigen beispielsweise 50us oder weniger um sich einzuschwingen. Danach werden beide Phasenmessungen M(f2) zu den Zeitpunkten t3 und t4 für die Frequenz f2 wiederholt, wobei der zweite Phasenwert φA2 der ersten Phase im ersten Knoten A und der vierte Phasenwert φB2 der zweiten Phase im zweiten Knoten B ermittelt werden. Somit sind der erste Wert φA1 der ersten Phase und der dritte Wert φB1 der zweiten Phase derselben Trägerfrequenz f1 zugeordnet. Ebenfalls sind der zweite Wert φA2 der ersten Phase und der vierte Wert φB2 der zweiten Phasen derselben erhöhten Trägerfrequenz f2 zugeordnet.

Aus den Phasenwerten φA1, φB1, φA2 und φB2 kann eine Phasendifferenz $\Delta\varphi$ berechnet werden zu:

$$\Delta\varphi = \left(\varphi_{A2} - \varphi_{B2}\right) - \left(\varphi_{A1} - \varphi_{B1}\right) \tag{3a}$$

Durch Umformung erhält man:

$$\Delta\varphi = \left(\varphi_{A2} - \varphi_{A1}\right) - \left(\varphi_{B2} - \varphi_{B1}\right) \tag{3b}$$

Somit kann die Entfernung d berechnet werden zu:

$$d = \frac{\Delta\varphi c}{\pi\Delta f} \tag{4}$$

Abweichend von der theoretischen Darstellung der Fig. 3 werden in der Realität die Knoten A, B Referenztaktgeneratoren 110, 210 aufweisen, deren Frequenzen f(XOSC1), f(XOSC2) beispielsweise aufgrund von Fertigungstoleranzen oder unterschiedlichen Temperaturen einen Frequenzoffset aufweisen. Dadurch ändert sich die Phase φ im jeweils empfangenden Knoten, wie dies schematisch durch die Steigungen der Phasenverläufe in Fig. 4 dargestellt ist.

Die Phasenänderung der Messung M(f1) zwischen den Messzeitpunkten t1 und t2 bewirkt zur bestimmten Phase φcalc einen Phasenfehler φerr. Der gleiche Phasenfehler φerr entsteht in der Messung M(f2) zu den Messzeitpunkten t3 und t4, wenn ein zeitlicher Abstand zwischen den Phasenmessung M(f1), M(f2) hinreichend klein ist. Sind die Zeitabstände t2-t1 und t4-t3 oder die Zeitabstände t3-t1 und t4-t2 gleich groß, ist auch der Phasenfehler φerr gleich groß und fällt bei der Berechung der Phasendifferenz $\Delta\varphi$ (siehe Gleichung (3a/3b)) heraus. Dadurch kann die Entfernungsmessung anhand der Phasenmessung auch dann angewendet werden, wenn die Referenztaktgeneratoren 110, 210 der beiden Knoten A, B unsynchronisiert sind, wie im Ausführungsbeispiel der Fig. 1.

In Fig. 1 ist dargestellt, dass die Schaltung des ersten Knotens A eine erste Steuerschaltung 160 aufweist. Die erste Steuerschaltung 160 ist eingerichtet die Messung der Phase φ zu zumindest zwei vorbestimmten Zeitpunkten t2, t4 zu triggern. Zur Steuerung der Phasenmessung zu den zumindest zwei vorbestimmten Zeitpunkten t2, t4 ist die erste Steuerschaltung 160 beispielsweise mit einem Steuereingang en der ersten Phasenmessschaltung 140 verbunden. Beispielsweise wird zu den zumindest zwei vorbestimmten Zeitpunkten t2 und t4 ein Wert der Phase φ berechnet oder zu den zumindest zwei vorbestimmten Zeitpunkten t2 und t4 wird der aktuelle Wert der fortlaufend berechneten Phase φ gespeichert.

Die Schaltung des zweiten Knotens B weist ebenfalls eine zweite Steuerschaltung 260 auf. Die zweite Steuerschaltung 260 ist eingerichtet die Messung der Phase φ zu zumindest zwei vorbestimmten Zeitpunkten t1, t3 zu triggern. Zur Steuerung der Phasenmessung zu den zumindest zwei vorbestimmten Zeitpunkten t1, t3 ist die zweite Steuerschaltung 260 beispielsweise mit einem Steuereingang en der zweiten Phasenmessschaltung 240 verbunden.

Ein Zeitabstand zwischen den zu zumindest zwei vorbestimmten Zeitpunkten t2, t4 der Steuerschaltung 160 im ersten Knoten A und ein zwischen den zu zumindest zwei vorbestimmten Zeitpunkten t1, t3 der Steuerschaltung 260 im zweiten Knoten B sind dabei gleich. Damit sind ein Zeitabstand zwischen den Phasenmessungen M(f1) der ersten Frequenzen und ein Zeitabstand zwischen den Phasenmessungen M(f2) der zweiten geänderten Frequenzen ebenfalls gleich. Sollen weitere Phasen bei weiteren Trägerfrequenzen gemessen werden, so werden auch diese durch die Steuerschaltungen 160, 260 in einem gleichen Zeitabstand gesteuert.

Weiterhin ist die erste Steuerschaltung 160 des ersten Knoten A eingerichtet einen ersten Multiplikationsfaktor F1 in der ersten Phasenregelschleife 120 zu steuern. Die zweite Steuerschaltung 260 des zweiten Knotens B ist eingerichtet einen zweiten Multiplikationsfaktor F2 in der zweiten Phasenregelschleife 220 des zweiten Knotens B zu steuern. Durch die Multiplikationsfaktoren F1, F2 werden gleiche oder um einen Offset unterschiedliche Frequenzen der Oszillatorsignale LO1, LO2 des ersten Knotens A und des zweiten Knotens B gesteuert. Beispielsweise werden die Frequenzen der Oszillatorsignale LO1, LO2 in Stufen verändert.

Die Erfindung ist nicht auf die dargestellten Ausgestaltungsvarianten der Figuren 1 bis 4 beschränkt. Die Funktionalität des Systems eines Funknetzes wird vorteilhaft für ein Funksystem nach dem Industrie-Standard IEEE 802.15.4 oder nach dem Industrie-Standard IEEE 802.15.1 verwendet.

Bezugszeichenliste

| | |
|---|---|
| 100, 200 | Radio, Transceiver |
| 110, 210 | Referenztaktgenerator, Quarzoszillator |
| 120, 220 | Phasenregelschleife |
| 130, 230 | Sender-Empfänger-Schaltung |
| 130, 240 | Phasenmessschaltung, Phasendetektor |
| 150, 250 | Frequenzteiler |
| 160, 260 | Steuerschaltung |
| RF1, RF2 | Trägersignal |
| LO1, LO2 | Oszillatorsignal |
| ZF1, ZF2 | Zwischenfrequenzsignal |
| SV1, SV2 | Vergleichssignal |
| XOSC1, XOSC2 | Referenzsignal, Referenztakt |
| en | Steuereingang |
| F1, F2 | Multiplikator |
| f(ZF1), f(ZF2) | Zwischenfrequenz |
| f(SV1), f(SV2) | Vergleichsfrequenz |
| $\varphi$, $\varphi A1$, $\varphi A2$, $\varphi B1$, $\varphi B2$ | Phase |
| $\varphi calc$ | bestimmte Phase |
| $\varphi err$ | Phasenfehler |
| t | Zeit |
| T | Periode |
| M(f1), M(f2) | Phasenmessung |
| TX | Senden |
| RX | Empfangen |
| Fsync | Rahmen zur zeitlichen Synchronisation |
| DF | Teilerfaktor |
| N | Anzahl |
| t1, t2, t3, t4, t5, t6 | Messzeitpunkt |
| t | Zeit |
| tAS, tBS | Timerlänge |
| TXE, SFD | Timerstartzeitpunkt |
| fTX | Sendefrequenz |
| fchm, f1, f2 | Frequenz |

**Patentansprüche**

1. Verfahren zur Entfernungsmessung zwischen zwei Knoten (A, B) eines Funknetzes,

  - bei dem vom ersten Knoten (A) ein erstes unmoduliertes Trägersignal (RF1) gesendet und vom zweiten Knoten (B) empfangen wird,

- bei dem vom zweiten Knoten (B) ein zweites unmoduliertes Trägersignal (RF2) gesendet und vom ersten Knoten (A) empfangen wird,

- bei dem vom ersten Knoten (A) ein erster Wert und ein zweiter Wert einer ersten Phase (φA1, φA2) gemessen werden, wobei der erste Wert der ersten Phase (φA1, φA2) einer ersten Frequenz (f1) des empfangenen zweiten Trägersignals (RF2) und der zweite Wert der ersten Phase (φA1, φA2) einer zweiten Frequenz (f2) des empfangenen zweiten Trägersignals (RF2) zugeordnet sind, wobei die erste Frequenz (f1) und die zweite Frequenz (f2) einen Frequenzunterschied (Δf) aufweisen,

- bei dem vom zweiten Knoten (B) ein dritter Wert und ein vierter Wert einer zweiten Phase (φB1, φB2) gemessen werden, wobei der dritte Wert der zweiten Phase (φB1, φB2) einer dritten Frequenz (f1) des empfangenen ersten Trägersignals (RF1) und der vierte Wert der zweiten Phase (φB1, φB2) einer vierten Frequenz (f2) des empfangenen ersten Trägersignals (RF1) zugeordnet sind, wobei die dritte Frequenz (f1) und die vierte Frequenz (f2) den Frequenzunterschied (Δf) aufweisen, und

- bei dem die Entfernung aus dem Frequenzunterschied (Δf) und aus dem ersten Wert und dem zweiten Wert der ersten Phase (φA1, φA2) und aus dem dritten Wert und dem vierten Wert der zweiten Phase (φB1, φB2) bestimmt wird.

2. Verfahren nach Anspruch 1,

- bei dem eine zeitliche Synchronisation der Messungen der Werte durchgeführt wird, so dass Messzeitpunkte (t1, t2, t3, t4) der Messungen der Werte eine vorbestimmte zeitliche Beziehung zueinander aufweisen.

3. Verfahren nach einem der Ansprüche 1 oder 2,

- bei dem ein erster zeitlicher Abstand (t4-t2) und ein zweiter zeitlicher Abstand (t3-t1) gleich sind, wobei der erste zeitliche Abstand (t4-t2) zwischen einem ersten Messzeitpunkt (t2) des ersten Wertes der ersten Phase (φA1, φA2) und einem zweiten Messzeitpunkt (t4) des zweiten Wertes der ersten Phase (φA1, φA2) definiert ist, und wobei der zweite zeitliche Abstand (t3-t1) zwischen einem dritten Messzeitpunkt (t1) des dritten Wertes der zweiten Phase (φB1, φB2) und einem vierten Messzeitpunkt (t3) des vierten Wertes der zweiten Phase (φB1, φB2) definiert ist.

4. Verfahren nach einem der vorhergehenden Ansprüche,

- bei dem zur Bestimmung der Entfernung eine Phasendifferenz (Δφ) aus dem ersten Wert und dem zweiten Wert der ersten Phase (φA1, φA2) und aus dem dritten Wert und dem vierten Wert der zweiten Phase (φB1, φB2) berechnet wird, insbesondere nach der Formel:

$$\Delta\varphi = \left(\varphi_{A2} - \varphi_{B2}\right) - \left(\varphi_{A1} - \varphi_{B1}\right) .$$

oder ihrer algebraischen Umformungen,

wobei φA1 der erste Wert und φA2 der zweite Wert der ersten Phase und wobei φB1 der dritte Wert und φB2 der vierte Wert der zweiten Phase sind.

5. Verfahren nach einem der vorhergehenden Ansprüche,

- bei dem das erste unmodulierte Trägersignal (RF1) mittels eines ersten Oszillatorsignals (LO1) durch einen ersten Referenztaktgenerator (110) und eine erste Phasenregelschleife (120) des ersten Knotens (A) erzeugt wird,

- bei dem das zweite unmodulierte Trägersignal (RF2) mittels eines zweiten Oszillatorsignals (LO2) durch einen zweiten Referenztaktgenerator (210) und eine zweite Phasenregelschleife (220) eines zweiten Knotens (B) erzeugt wird,

- bei dem durch eine Phasenmessschaltung (140) des ersten Knotens (B) der erste Wert und der zweite Wert der ersten Phase (φA1, φA2) des empfangenen zweiten Trägersignals (RF2) des zweiten Knotens (B) relativ zu einem ersten Referenzsignal (XOSC1) des ersten Referenztaktgenerator (110) gemessen werden,

- bei dem durch eine Phasenmessschaltung (240) des zweiten Knotens (B) der dritte Wert und der vierte Wert

der zweiten Phase (φB1, φB2) des empfangenen ersten Trägersignals (RF1) des ersten Knotens (A) relativ zu einem zweiten Referenzsignal (XOSC2) des zweiten Referenztaktgenerator (210) gemessen werden.

6. Verfahren nach Anspruch 5,

- bei dem ein durch eine erzeugte erste Referenzfrequenz (f(XOSC1)) des ersten Referenzsignals (XOSC1) und eine erzeugte zweite Referenzfrequenz (f(XOSC)) des zweiten Referenzsignal (XOSC2) verursachter Phasenfehler (φerr) kompensiert wird, wobei der Phasenfehler (φerr) insbesondere kompensiert wird durch Subtraktion des zweiten Wertes vom ersten Wert der ersten Phase (φA1, φA2) und des vierten Wertes vom dritten Wert der zweiten Phase (φB1, φB2).

7. System zur Entfernungsmessung zwischen zwei Knoten (A, B) eines Funknetzes,

- bei dem ein erster Knoten (A) eingerichtet ist ein erstes unmoduliertes Trägersignal (RF1) zu senden und ein zweites unmoduliertes Trägersignal (RF2) zu empfangen,
- bei dem ein zweiter Knoten (B) eingerichtet ist das zweite unmodulierte Trägersignal (RF2) zu senden und das erste unmodulierte Trägersignal (RF1) zu empfangen,
- bei dem der erste Knoten (A) eine erste Phasenmessschaltung (140) zur Messung eines ersten Wertes und eines zweiten Wertes einer ersten Phase (φA1, φA2) des empfangenen zweiten Trägersignals (RF2) aufweist, wobei der erster Wert der ersten Phase (φA1, φA2) einer ersten Frequenz (f1) des empfangenen zweiten Trägersignals (RF2) und der zweite Wert der ersten Phase (φA1, φA2) einer zweiten Frequenz (f2) des empfangenen zweiten Trägersignals (RF2) zugeordnet sind, wobei die erste Frequenz (f1) und die zweite Frequenz (f2) einen Frequenzunterschied (Δf) aufweisen,
- bei dem der zweite Knoten (B) eine zweite Phasenmessschaltung (240) zur Messung eines dritten Wertes und eines vierten Wertes einer zweiten Phase (φB1, φB2) des empfangenen ersten Trägersignals (RF1) aufweist, wobei der dritte Wert der zweiten Phase (φB1, φB2) einer dritten Frequenz (f1) des empfangenen ersten Trägersignals (RF1) der vierte Wert der zweiten Phase (φB1, φB2) einer vierten Frequenz (f2) des empfangenen ersten Trägersignals (RF1) zugeordnet sind, wobei die dritte Frequenz (f1) und die vierte Frequenz (f2) den Frequenzunterschied (Δf) aufweisen,
- bei dem der erste Knoten (A) und/oder der zweite Knoten (B) und/oder ein weiterer Knoten eingerichtet ist die Entfernung aus dem Frequenzunterschied (Δf), aus dem ersten Wert und dem zweiten Wert der ersten Phase (φA1, φA2) und aus dem dritten Wert und dem vierten Wert der zweiten Phase (φB1, φB2) zu bestimmen.

8. System nach Anspruch 7,

- bei dem erste Knoten (A) eine erste Steuerschaltung (160) und der zweite Knoten (B) eine zweite Steuerschaltung (260) zur zeitlichen Synchronisation der Messungen aufweisen,
- bei dem die erste Steuerschaltung eingerichtet ist einen ersten Messzeitpunkt (t2) des ersten Wertes der ersten Phase (φA1, φA2) und einen zweiten Messzeitpunkt (t4) des zweiten Wertes der ersten Phase (φA1, φA2) zu steuern,
- bei dem die zweite Steuerschaltung eingerichtet ist einen dritten Messzeitpunkt (t1) des dritten Wertes der zweiten Phase (φB1, φB2) und einen vierten Messzeitpunkt (t3) des vierten Wertes der zweiten Phase (φB1, φB2) zu steuern,
- wobei ein erster zeitlicher Abstand (t4-t2) zwischen dem ersten Messzeitpunkt (t2) und dem zweiten Messzeitpunkt (t4) und ein zweiter zeitlicher Abstand (t3-t1) zwischen dem dritten Messzeitpunkt (t1) und dem vierten Messzeitpunkt (t3) gleich sind.

9. System nach einem der vorhergehenden Ansprüche,

- bei dem der erste Knoten (A) einen ersten Referenztaktgenerator (110) für eine erste Phasenregelschleife (120) zur Erzeugung eines ersten Oszillatorsignals (LO1) für das erste Trägersignal (RF1) aufweist,
- bei dem der zweite Knoten (B) einen zweiten Referenztaktgenerator (210) für eine zweite Phasenregelschleife (220) zur Erzeugung eines zweiten Oszillatorsignals (LO2) für das zweite Trägersignal (RF2) aufweist,
- bei dem der erste Knoten (A) zur Messung der ersten Phase (φA1, φA2) des empfangenen zweiten Trägersignals (RF2) relativ zu einem ersten Referenzsignal (XOSC1) des ersten Referenztaktgenerators (110) ausgebildet ist, und
- bei dem der zweite Knoten (B) zur Messung der zweiten Phase (φB1, φB2) des empfangenen ersten Trägersignals (RF1) relativ zu einem zweiten Referenzsignal (XOSC2) des zweiten Referenztaktgenerators (210) ausgebildet ist.

10. System nach einem der vorhergehenden Ansprüche,

- bei dem der erste Knoten (A) zur Änderung der ersten Trägerfrequenz des ersten Trägersignals (RF1) und der zweite Knoten (B) zur Änderung einer Trägerfrequenz des zweiten Trägersignals (RF2) ausgebildet sind, wobei der erste Knoten (A) eingerichtet ist einen ersten Multiplikatorfaktor (F1) der ersten Phasenregelschleife (120) zur Multiplikation der ersten Referenzfrequenz (f(XOSC1)) des ersten Referenztaktgenerators (110) und der zweite Knoten (B) eingerichtet ist einen zweiten Multiplikatorfaktor (F2) zur Multiplikation der zweiten Referenzfrequenz (f(XOSC2)) des zweiten Referenztaktgenerators (210) der zweiten Phasenregelschleife (220) um den denselben Wert zu ändern.

11. System nach einem der vorhergehenden Ansprüche,

- bei dem der zweite Knoten (B) zur Messdatenübertragung der gemessenen Werte ($\varphi$B1, $\varphi$B2) der zweiten Phase an den ersten Knoten (A) eingerichtet ist, und/oder
- bei dem der erste Knoten (A) zur Messdatenübertragung der gemessenen Werte ($\varphi$A1, $\varphi$A2) der ersten Phase an den zweiten Knoten (B) eingerichtet ist.

12. System nach einem der vorhergehenden Ansprüche,

- bei dem der ersten Knote (A) und/oder der zweite Knoten (B) zur Übertragung eines Rahmens zur zeitlichen Synchronisation der Messzeitpunkte (t1, t2, t3, t4) eingerichtet ist.

13. System nach Anspruch 12,

- der erste Knoten (A) und/oder der zweite Knoten (B) eine Steuerschaltung (160, 260) aufweist, die ausgebildet ist in Abhängigkeit von dem Rahmen zur Synchronisation mittels eines Timers die Messzeitpunkte (t1, t2, t3, t4) zu steuern.

14. Schaltung eingerichtet zur Entfernungsmessung für einen Knoten eines Funknetzes,

- mit einer Sender-Empfänger-Schaltung (130) zum Senden eines ersten unmodulierten Trägersignals (RF1) mit unterschiedlichen Frequenzen (f1, f2) und zum Empfang eines zweiten unmodulierten Trägersignals(RF2),
- mit einem Referenztaktgenerator (110) für eine Phasenregelschleife (120) zur Erzeugung eines lokalen Oszillatorsignals (LO1) zum Heruntermischen des empfangenen zweiten Trägersignals (RF2) auf ein Zwischenfrequenzsignal (ZF2) durch die Sender-Empfänger-Schaltung (130),
- mit einem Frequenzteiler (150), der mit dem Referenztaktgenerator (110) zur Erzeugung eines Vergleichssignals (SV1) verbunden ist,
- mit einer Phasenmessschaltung (140), die zur Auswertung einer Phase ($\varphi$) zwischen dem Zwischenfrequenzsignal (ZF2) und dem Vergleichssignal (SV1) mit der Sender-Empfänger-Schaltung (130) und dem Frequenzteiler (150) verbunden ist, und
- mit einer mit der Phasenmessschaltung (140) verbundenen Steuerschaltung (160), die zur Steuerung von zeitlich synchronisierten Messzeitpunkten (t2, t4) der Messung eines ersten Wertes und eines zweiten Wertes der Phase ($\varphi$) eingerichtet ist, wobei der erste Wert einer ersten Frequenz (f1) des empfangenen zweiten Trägersignals (RF2) und der zweite Wert einer zweiten Frequenz (f2) des empfangenen zweiten Trägersignals (RF2) zugeordnet ist, und wobei die erste Frequenz (f1) und die zweite Frequenz (f2) einen Frequenzunterschied ($\Delta$f) aufweisen.

FIG.1

FIG. 2a

FIG. 2b

FIG. 2c

FIG.3

FIG.4

Europäisches
Patentamt

European
Patent Office

Office européen
des brevets

**EUROPÄISCHER RECHERCHENBERICHT**

Nummer der Anmeldung

EP 09 01 5917

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 5 220 332 A (BECKNER FREDERICK L [US] ET AL) 15. Juni 1993 (1993-06-15) * Spalte 2, Zeilen 54-58 * * Spalte 6, Zeile 65 - Spalte 7, Zeile 16 * * Spalte 8, Zeilen 36-67 * * Spalte 9, Zeilen 10-42 * * Abbildungen 2, 3 * ----- | 1-14 | INV. G01S13/84 |
| X | WO 03/052455 A1 (AUSTRIAMICROSYSTEMS AG [AT]; SCHULTES GERHARD [AT]) 26. Juni 2003 (2003-06-26) * Zusammenfassung * * Seite 1, Absatz 2 * * Seite 4, Absätze 5,6 * * Seite 6, Absätze 2,4 * * Seite 9, Absatz 5 * * Seite 13, Absatz 4 - Seite 14, Absatz 4 * * Seite 16, Absatz 3 * ----- | 1-14 | |
| A | US 2 742 638 A (HAYWOOD VERNON M ET AL) 17. April 1956 (1956-04-17) * das ganze Dokument * ----- | 1-14 | RECHERCHIERTE SACHGEBIETE (IPC) G01S |

Der vorliegende Recherchenbericht wurde für alle Patentansprüche erstellt

| Recherchenort | Abschlußdatum der Recherche | Prüfer |
|---|---|---|
| München | 30. April 2010 | Beer, Mark |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 01 5917

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2010

| Im Recherchenbericht angeführtes Patentdokument | Datum der Veröffentlichung | Mitglied(er) der Patentfamilie | Datum der Veröffentlichung |
|---|---|---|---|
| US 5220332 A | 15-06-1993 | KEINE | |
| WO 03052455 A1 | 26-06-2003 | AU 2002366348 A1<br>DE 10161507 A1<br>EP 1454163 A1 | 30-06-2003<br>03-07-2003<br>08-09-2004 |
| US 2742638 A | 17-04-1956 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5220332 A
- WO 0201247 A2
- US 6731908 B2